## Europäisches Patentamt

## European Patent Office

## Office européen des brevets

(11) Publication number: **0 100 622**
**B1**

(12) **EUROPEAN PATENT SPECIFICATION**

(45) Date of publication of patent specification: **04.03.87**

(21) Application number: **83304142.9**

(22) Date of filing: **15.07.83**

(51) Int. Cl.⁴: **B 60 S 1/38**

(54) Improvements in or relating to windscreen wipers.

(30) Priority: **31.07.82 GB 8222172**

(43) Date of publication of application:
**15.02.84 Bulletin 84/07**

(45) Publication of the grant of the patent:
**04.03.87 Bulletin 87/10**

(84) Designated Contracting States:
**DE FR IT NL SE**

(56) References cited:
**DE-A-2 133 270**
**DE-B-1 266 156**
**DE-B-2 252 141**
**FR-A-2 356 541**
**GB-A-1 366 910**

(73) Proprietor: **Safewype International Limited**
**Unit 5b, Maybrook Road Castle Vale Industrial Estate**
**Minworth Sutton Coldfield West Midlands (GB)**

(72) Inventor: **Knibbs, George Safewype**
**International Ltd. Unit 58**
**Maybrook Road Castle Vale Industrial Estate**
**Minworth Sutton Coldfield West Midlands (GB)**

(74) Representative: **Campbell, Iain Angus et al**
**Swindell & Pearson 44 Friar Gate**
**Derby DE1 1DA (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention concerns an improved windscreen wiper as specified in the preamble of claim 1, i.e. as disclosed in FR—A—2356541.

Over recent years a need to provide a windscreen wiper which is more efficient than existing wipers and can cope not only with rain-water but also with debris, for example mud and squashed insects, has been identified and several improved arrangements have been proposed some incorporating in addition to the normal wiper blade elements such as scrapers and brushes. Our U.K. Patent GB—A—1366910 discloses one form of improved wiper which has been proved in practice to be successful especially on flat windscreens. Problems have arisen, however, in use of prior compound wipers on curved windscreens and especially on those cars where the radius of curvature of the curve of the windscreen is pronounced.

Several attempts have been made to use compound wipers for example in French patent Specification FR—A—2356541 a compound wiper is disclosed for wiping headlamps in which the wiping member (when provided) does not combine with the bearing members to increase wiping efficiency. This wiper is primarily concerned with removing dirt from the headlamps, not particularly with removing water. In German Specification DE—A—1266156 a wiper is disclosed with brush members on either side of the wiping lip. These brush members are angled away from the wiping member so not to overlie the wiping member thus not producing the increased wiping efficiency that overtying the wiping member brings.

It is an object of the present invention to provide a compound wiper that provides for a pre-wipe removing debris and a wiping blade with an improved wiping action.

According to the present invention there is provided a windscreen wiper comprising a flexible wiping member extending longitudinally of the wiper and fixed to a body member and two bearing members mounted on the body member on each side of the wiping member, characterised in that the length of the wiping member projecting out of the body member is greater than the length of each bearing member projecting out of the body member so that when, in use, the wiping member is deflected relative to the body member, its free end is sandwiched between the bearing member and the surface being wiped.

Preferably the bearing members are brushes but alternatively they may be plastics material scrapers.

Preferably the wiping member is fixed to a body member capable of being mounted in a wiper backing member or spine intended for use with standard wiper blades.

The body member may include passages therethrough to supply cleaning fluid to the windscreen. Said passages may be arranged to project washing fluid onto the windscreen either externally of the cavity defined by the bearing members, the body member and the windscreen, or alternatively into the cavity.

Preferably valve means are provided for the passages such that in operation cleaning fluid is supplied to the area of the windscreen in front of the wiper.

Preferably the brushes of the bearing members are provided with plastics material bristles mounted in a plastics material spine having a width greater than the width of the assembly of bristles.

Preferably the wiping member and body member are formed integrally by extrusion from a synthetic rubber material. Preferably channels of substantially T-shaped cross section are formed in the body member on either side of the wiping member to accommodate the bearing members.

Alternatively the wiping member may be formed as a separate unit mounted in a body member manufactured from a more rigid plastics material. In this instance the wiping member may be provided with an upper flange adapted from mounting in a T-shaped channel in the body member. It is possible that the bristles of the brush member may be mounted directly in the plastics body member.

It will be realised that with a more rigid body member, for example the plastics body member described in the immediately preceding paragraphs the need for a standard windscreen wiper spine may not be evident and the wiper may be mounted directly to the wiper assembly carrier.

Embodiments of the present invention will now be described by way of example only with reference to the accompanying drawing in which:—

Fig. 1 shows a cross section through a first form of wiper element

Fig. 2 shows a cross section through a second form of wiper element

Fig. 3 shows the wiper element of Fig. 2 during operation Fig. 4 shows a further form of wiper element and

Fig. 5 shows a further form of wiper element.

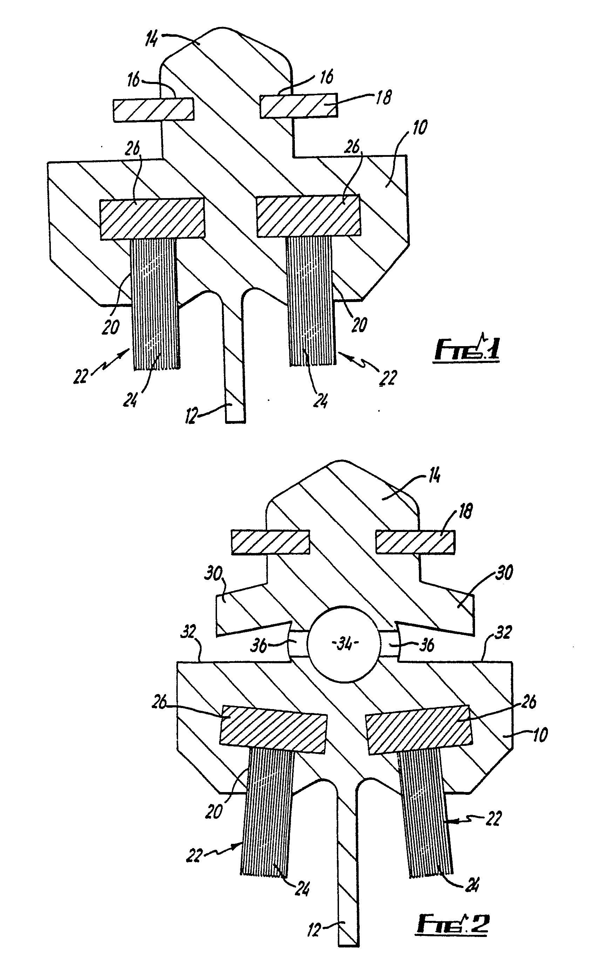

Fig. 1 illustrates a cross-sectional elevation of a wiper including a wiping member and two brush members. A body member 10 has a wiping member or blade 12 formed integrally therewith and projecting from its base. On the side of the body member remote from the blade 12 there is provided a longitudinally extending ridge 14 having grooves 16 formed in its opposed upstanding faces, the grooves 16 being intended to accommodate the flexible steel backing member or spine 18 of a windscreen wiper. On either side of the centre line of the body member 10 there are formed two channels 20 of T-shaped cross-section. Longitudinally extending bearing members in the form of brushes 22 are mounted in the channels, the brushes 22 having bristles 24 fixed to a rectangular cross-section backing member or spine 26.

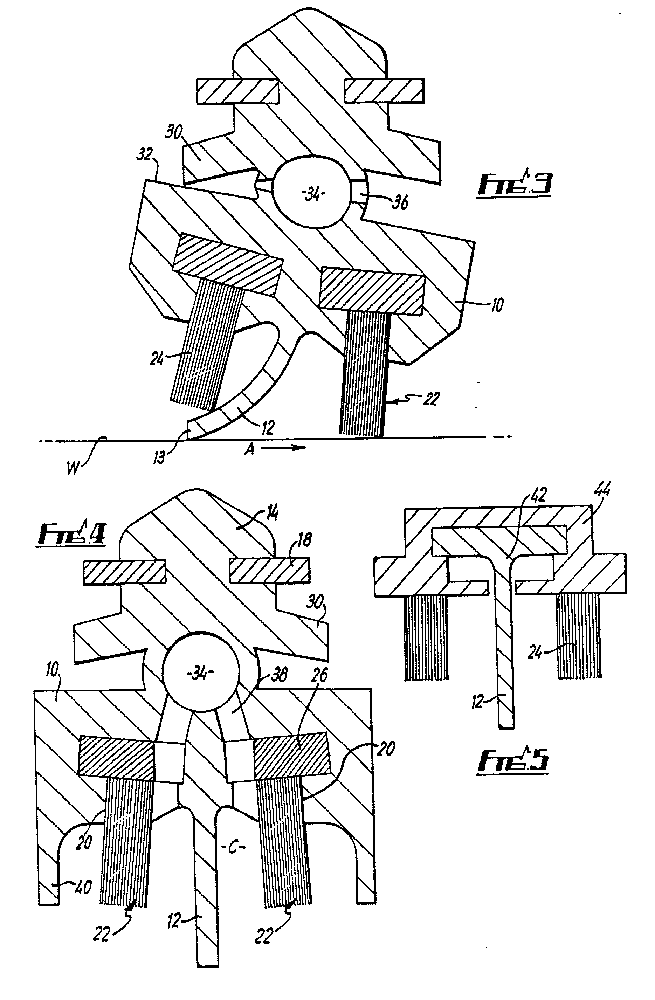

A modified wiper is illustrated in Figs. 2 and 3, Figure 3 showing also the outer surface W of a windscreen. A number of the components of the wiper shown in Figs. 2 and 3 are common to that shown in Fig. 1 and have been given the same reference numerals: they will not be described again in detail. In this embodiment, however, the longitudinal ridge 14 is modified. It is provided along each of its sides with a flap 30 spaced above the upper surface 32 of the body member 10. The width of the ridge 14 intermediate the flap 30 and said upper surface 32 is reduced compared to the width at the spine 18 and a cleaning fluid passage 34 of substantially circular cross section extends through this ridge at the reduced width portion. At intervals along the length of the element transverse passages 36 provide communication for cleaning fluid between the passage 34 and the exterior of the element. It will be realised that if the fluid is supplied under sufficient pressure it will be projected onto the windscreen and Figure 3 illustrates how the feed of fluid to the windscreen is controlled such that it is supplied, in use, to only the leading side of the wiper.

In Figure 3 it can be seen that in operation as the wiper moves across the surface of the windscreen W in the direction of arrow A not only is the wiping blade 12 deformed such that it trails but also the body member 10 pivots in a clockwise direction. This pivoting movement causes the passages 36 on the trailing side of the wiper to tend to close and if the flaps 30 are designed such that their length is adequate they abut the upper surface 32 to further cut off the supply of cleaning fluid.

Figure 3 illustrates an important feature of the invention which is the length of the blade 12 projecting beyond the under-face of the body 10. This is carefully chosen such that it is greater than the amount of projection of the bristles 24 but is only so great that when the wiper is deformed in use, as illustrated in Figure 3, the free end 13 of the blade is located below the ends of the bristles 24 of the trailing brush.

It has been found that this gives rise to a particularly efficient arrangement and considerably reduces the drag on the wiping element caused by the contact of the blade 12 with the windscreen surface W. At the commencement of a wiping stroke, at one point, the blade occupies a position substantially similar to that shown in Figure 2 and as the wiping arm moves the wiping element across the windscreen in the direction of arrow A the blade 12 deforms. During this initial movement the body member occupies a position similar to that shown in Figure 2 as the drag exerted on the blade is considerable, the body 10 is caused to tilt relative to the ridge 14 until the lower ends of the bristles 24 of the leading brush contact the surface W of the windscreen. As well as acting as a scrubbing member, in this condition, they act as a bearing member for the wiper and the co-efficient of friction between the ends of the bristles and the windscreen is much reduced compared with that between the blade alone and the windscreen so that the drag is reduced without decreasing the wiping efficiency of the blade 12 which is held in contact with the windscreen surface W not only by virtue of its own resilience and the resilience of the body member 10 but also under the downward force exerted by the bristles 24 of the trailing brush.

At the end of a traverse of the wiper the motion is reversed and the blade "flips over" to occupy a position with its free end under the ends of the bristles of the other brush.

In Figure 4 there is shown a further modified wiper and, again, components similar to the components illustrated in the Figure 1 embodiment have been given the same reference numerals and will not be described in detail. In this arrangement cleaning fluid is supplied to a cavity defined in operation by the bristles of the leading brush 22 the body member 10 the blade 12 and the windscreen surface W. Passage means 38 between the cleaning fluid conduit 34 and this cavity C are provided through the body member 10. Downwardly projecting auxiliary members 40 are provided at the lateral extremities of the body member 10 to contain the cleaning fluid in the area of operation.

It has been found that to increase the flexibility of the wiping element in the longitudinal direction such that it can readily curve to the curved profile of the windscreen the brushes should be located as close to the spine 18 as possible and an attempt to provide this facility is illustrated in Figure 5. In this embodiment the blade 12 is not formed integrally with the body member but has an upper flange 42 mounted in a substantially T-shaped channel formed in a relatively rigid plastics material body member 44, the depth of which is less than its width.

In view of the relatively rigid nature of the body member 44 it is possible to directly mount the bristles 24 therein. When considering the operation of the wiper of Figure 2 it is apparent that a resilient twisting moment tending to restore the wiping element to its undeformed condition is necessary for the effective operation of the wiper. It will be realised that as the body of the wiper shown in Figure 5 is relatively rigid such that resilience is not built into the element and it is necessary, therefore, that the mounting of the element of Figure 5 to the wiper arm is such that rotational resilience is provided.

Various other modifications can be made within the scope of the invention, for example the bearing brushes may be replaced by other bearing members, such as nylon members adapted to scrape rather than scrub debris off the windscreen in the path of the wiper blade. In this modification the nylon members are remounted in the manner similar to the brushes but, of course further alternative mounting methods could be employed. Additionally, as illustrated in Figure 5, it is not necessary for the blade 12 to be formed as an integral part of the body member: it could be formed as a replaceable member perhaps being manufactured from a different material from the body member. Another modification can be achieved by varying the position of the brushes but it has to be realised that there is a distinct and important relationship between the length of the brushes, their position relative to the blade and the length of the blade so that the effects shown in Figure 3 or an effect resembling this are obtained during a wiping operation.

In a still further modification the spine 18 could be moulded integrally into the ridge 40. Various modified methods of supplying cleaning fluid to the windscreen could be employed and in fact it is not necessary to provide a central conduit 34 to supply the cleaning fluid. This could be provided by a separate external tube mounted alongside the ridge or in any other convenient location. In addition, if the cleaning fluid distributing means illustrated in Figure 2 are employed, that is with a valving arrangement to prevent the flow of cleaning fluid to the trailing edge of the blade, then any suitable method of valve to control the cleaning fluid may be used.

It should be realised that whereas in the preceding description the method of manufacturing the body member and wiping member has been by extrusion, they can be moulded. Similarly the material employed need not be synthetic rubber but can be natural rubber or any suitable plastics material.

**Claims**

1. A windscreen wiper comprising a flexible wiping member extending longitudinally of the wiper and fixed to a body member and two bearing members mounted on the body member on each side of the wiping member, characterised in that the length of the wiping member (12) projecting out of the body member (10) is greater than the length of each bearing member (22) projecting out of the body member (10) by such an amount that when, in use, the wiping member (12) is deflected relative to the body member (10), its free end is sandwiched between the bearing member (22) and the surface being wiped.

2. A windscreen wiper as claimed in claim 1, characterised in that the bearing members are brushes (22).

3. A windscreen wiper as claimed in claim 1 or claim 2, characterised in that the wiping member (12) is fixed to a body member (10) capable of being mounted in a wiper backing member or spine (18) intended for use with standard wiper blades.

4. A windscreen wiper as claimed in claim 3, characterised in that the body member (10) includes passages (34, 36, 38) therethrough to supply cleaning fluid to the windscreen, said passages (34, 36, 38) being arranged to project washing fluid onto the windscreen either externally of the cavity defined by the bearing members (22), the body member (10) and the windscreen, or alternatively into the cavity, valve means being provided for the passages (34, 36, 38) such that in operation cleaning fluid is supplied to the area of the windscreen in front of the wipers.

5. A windscreen wiper as claimed in claim 4, characterised in that the brushes (22) are provided with plastics material bristles (24) mounted in a plastics material spine (26) having a width greater than the width of the assembly of bristles and in that channels (20) of substantially T-shaped cross-section are formed in the body member (10) on either side of the wiping member (12) to accommodate the spine (26).

6. A windscreen wiper as claimed in claim 5, characterised in that the wiping member (12) and body member (10) are formed integrally by extrusion from rubber material.

7. A windscreen wiper as claimed in claim 6, characterised in that the wiping member (12) is formed as a separate unit mounted in a body member (10) manufactured from a more rigid plastics material and is provided with an upper flange (42) adapted for mounting in a T-shaped channel in the body member (44).

8. A windscreen wiper as claimed in claim 7, characterised in that the bristles (24) of the brush member (22) are mounted directly in the plastics body member (44).

**Patentansprüche**

1. Scheibenwischer mit einem flexiblen Wischerglied, das sich längs des Wischers erstreckt und an einem Grundkörper befestigt ist, wobei zwei Stützglieder zu beiden Seiten des Wischergliedes am Grundkörper angeordnet sind, dadurch gekennzeichnet, daß die Länge des aus dem Grundkörper (10) herausragenden Wischergliedes (12) größer als die Länge der Stützglieder (22) ist, die soweit aus dem Grundkörper (10) herausragen, daß das freie Ende des Wischergliedes (12) beim Abbiegen zum Grundkörper (10) hin während des Gebrauchs zwischen den Stützgliedern (22) verschoben und die Oberfläche gewischt wird.

2. Scheibenwischer nach Anspruch 1, dadurch gekennzeichnet, daß die Stützglieder als Bürsten (22) ausgebildet sind.

3. Scheibenwischer nach Anspruch 1 oder 2, dadurch gekennzeichnet, daß das Wischerglied (12) an einem Grundkörper (10) angeordnet ist, der zur gemeinsamen Verwendung mit Standartwischblättern in ein Wischerverstärkungsglied oder eine Schiene (18) einsetzbar ist.

4. Scheibenwischer nach Anspruch 3, dadurch gekennzeichnet, daß der Grundkörper (10) zur Zuführung von Reinigungsflüssigkeit zur Windschutzscheibe Durchgänge (34, 36, 38) in einer Anordnung aufweist, daß Reinigungsflüssigkeit entweder außerhalb des durch die Stützglieder (22), den Grundkörper (10) und die Windschutzscheibe begrenzten Hohlraumes oder alternativ durch diesen Hohlraum auf die Windschutzscheibe gespritzt wird und daß Absperrvorrichtungen für die Durchgänge (34, 36, 38) vorgesehen sind, so daß beim Betrieb Reinigungsflüssigkeit der vor den Wischern liegenden Fläche zugeführt wird.

5. Scheibenwischer nach Anspruch 4, dadurch gekennzeichnet, daß die Bürsten (22) mit in einem Kunststoffrücken (26) befestigten Kunststoffbörsten (24) versehen sind, der eine größere Breite als die Breite der Borstenanordnung aufweist, und daß im Grundkörper (10) zu beiden Seiten des Wischergliedes Kanäle (20) mit im wesentlichen T-förmigem Querschnitt zur Aufnahme des Rückens (26) eingeformt sind.

6. Scheibenwischer nach Anspruch 5, daß das Wischerglied (12) und der Grundkörper (10) integral aus Gummimaterial gespritzt sind.

7. Scheibenwischer nach Anspruch 6, dadurch gekennzeichnet, daß das Wischerglied (12) als separate, in einem Grundkörper (10) aus einem steiferen Kunststoffmaterial eingesetzte Einheit ausgebildet und mit einem oberen Flansch (42) versehen ist, der zum Einsetzen in einen T-förmigen Kanal im Grundkörper (44) ausgebildet ist.

8. Scheibenwischer nach Anspruch 7, dadurch gekennzeichnet, daß die Borsten (24) des Bürstenglieds (22) direkt im Grundkörper (44) aus Kunststoff eingesetzt sind.

**Revendications**

1. Essuie-glace comportant un organe d'essuyage flexible s'étendant longitudinalement sur l'essuie-glace et fixé à un corps d'essuie-glace, et deux organes d'appui montés sur ce corps de part et d'autre de l'organe d'essuyage, caractérisé en ce que la longueur de l'organe d'essuyage (12) qui fait saillie par rapport au corps (10) est supérieure à la longueur de chaque organe d'appui (22) en saillie par rapport au corps (10) d'une quantité telle que lorsque, en cours d'utilisation, l'organe d'essuyage (12) est défléchi par rapport au corps (10), son extémité libre est prise en sandwich entre l'organe d'appui (22) et la surface essuyée.

2. Essuie-glace selon la revendication 1, caractérisé en ce que les organes d'appui sont constitués par des brosses (22).

3. Essuie-glace selon la revendication 1 ou la revendication 2, caractérisé en ce que l'organe d'essuyage (12) est fixé sur un corps (10) qui peut être monté sur un organe ou arête d'appui (18) prévu pour être utilisé avec des lames d'essuyage standard.

4. Essuie-glace selon la revendication 3, caractérisé en ce que le corps (10) comporte des passages (34, 36, 38) destinés à alimenter le pare-brise en fluide de nettoiement, ces passages (34, 36, 38) étant agencés pour projeter du fluide de lavage sur le pare-brise soit à l'extérieur de la cavité définie par les organes de soutien (22), le corps (10) et le pare-brise, soit dans cette cavité, des moyens à valves étant prévus en liaison avec les passages (34, 36, 38) de telle sorte qu'en fonctionnement du fluide de nettoiement soit expédié dans la zone du pare-brise qui fait face aux balais.

5. Essuie-glace selon la revendication 4, caractérisé en ce que les brosses (22) sont équipées de poils en matière plastique, montés sur une barrette en matière plastique (26) de largeur supérieure à celle de l'assemblage de poils, et en ce que des canaux (20) à section transversale substantiellement en T sont formés dans le corps (10) de chaque côté de l'organe d'essuyage (12) pour recevoir la barrette (26).

6. Essuie-glace selon la revendication 5, caractérisé en ce que l'organe d'essuyage (12) et le corps (10) sont réalisés d'un seul bloc par extrusion de matériau caoutchouteux.

7. Essuie-glace selon la revendication 6, caractérisé en ce que l'organe d'essuyage (12) est réalisé sous forme d'unité séparée montée dans un corps (10) réalisé à partir d'un matériau plastique plus rigide et est équipé d'un bourrelet supérieur (42) apte à être monté dans un canal en forme de T du corps (44).

8. Essuie-glace selon la revendication 7, caractérisé en ce que les poils (24) de la brosse (22) sont montés directement dans le corps en matière plastique (44).

0 100 622

Fig.1

Fig.2

1

*Fig. 3*

*Fig. 4*

*Fig. 5*